(19) **Europäisches Patentamt**
**European Patent Office**
**Office européen des brevets**

(11) **EP 3 806 402 B1**

(12) **FASCICULE DE BREVET EUROPEEN**

(45) Date de publication et mention
de la délivrance du brevet:
**24.08.2022 Bulletin 2022/34**

(21) Numéro de dépôt: **20200677.1**

(22) Date de dépôt: **08.10.2020**

(51) Classification Internationale des Brevets (IPC):
*H04L 41/0896* (2022.01)     *H04L 41/5022* (2022.01)

(52) Classification Coopérative des Brevets (CPC):
**H04L 41/5022; H04L 41/0897**

(54) **PROCÉDÉ DE CONTRÔLE D'ADMISSION DE TRANCHES DANS UN RÉSEAU DE TÉLÉCOMMUNICATION VIRTUALISÉ ET DE LA CONGESTION SUSCEPTIBLE D'ÊTRE GÉNÉRÉE ENTRE LES SERVICES DÉPLOYÉS SUR LESDITES TRANCHES**

VERFAHREN FÜR RUFZULASSUNGSSTEUERUNG VON SLICEN IN EINEM VIRTUELLEN KOMMUNIKATIONSNETZWERK UND VON DER ÜBERLASTUNG ZWISCHEN DEN ÜBER DIE SLICEN BEREITGESTELLTEN DIENSTEN

METHOD FOR CALL ADMISSION OF SLICES IN A VIRTUAL COMMUNICATION NETWORK AND OF THE CONGESTION GENERATED AMONG SERVICES DEPLOYED ON THE SLICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2019 FR 1911264**

(43) Date de publication de la demande:
**14.04.2021 Bulletin 2021/15**

(73) Titulaire: **Commissariat à l'énergie atomique et aux énergies alternatives**
**75015 Paris (FR)**

(72) Inventeurs:
• **DE DOMENICO, Antonio**
**38054 Grenoble Cedex 09 (FR)**
• **DANDACHI, Ghina**
**38054 Grenoble Cedex 09 (FR)**

(74) Mandataire: **Brevalex**
**95, rue d'Amsterdam**
**75378 Paris Cedex 8 (FR)**

(56) Documents cités:
**CN-A- 109 743 217     US-A1- 2019 173 803**

## Description

### Domaine technique

L'invention se situe dans le domaine des réseaux de télécommunication virtualisé et concerne plus spécifiquement un procédé de contrôle d'admission de tranches dans un réseau de télécommunication virtualisé ayant un réseau cœur et un réseau d'accès radio RAN et de la congestion générée par des services ayant des priorités différentes déployés sur lesdites tranches et susceptibles de partager une quantité de ressources donnée. L'invention concerne également un programme d'ordinateur mémorisé sur un support d'enregistrement et comportant des instructions pour mettre en œuvre le procédé lorsqu'il est exécuté sur un ordinateur.

### Etat de la technique antérieure

Au cours de la dernière décennie, la révolution technologique qui caractérise les réseaux de téléphonie mobile a changé notre façon de communiquer et conduit à de nouvelles applications et services, qui caractériseront la cinquième génération de systèmes de communication (5G) et les évolutions suivantes.

Ces nouvelles applications et services sont regroupés dans trois classes de cas d'utilisation, caractérisées, chacune, par des exigences spécifiques et des indicateurs de performance clés (KPI):

- communications ultra-fiables à faible temps de latence (URLLC),
- Communications massives de type machine (mMTC),
- Haut débit mobile amélioré (eMBB).

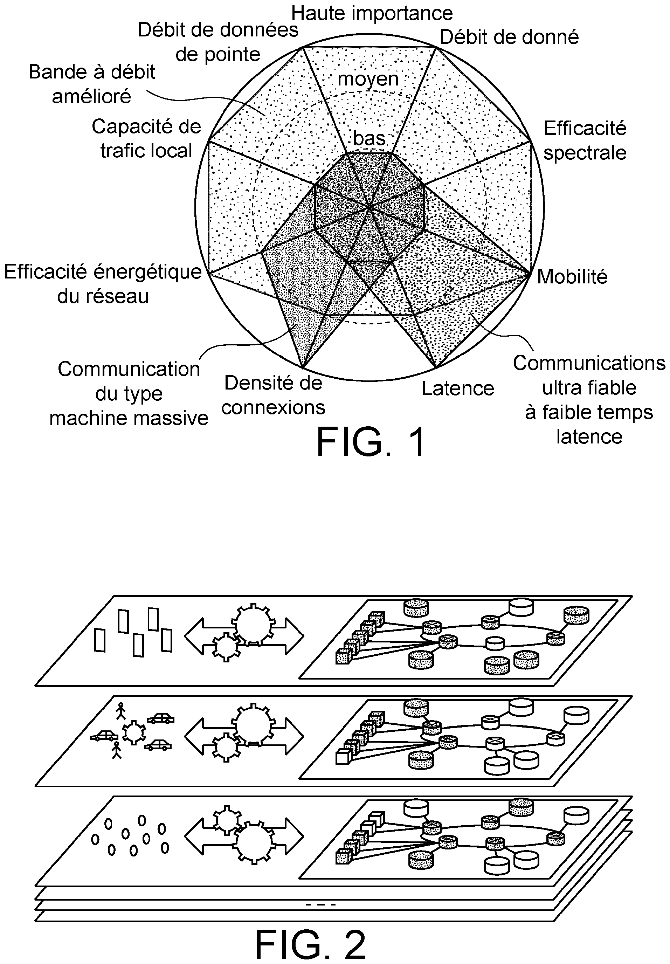

La figure 1 illustre la correspondance entre ces cas d'utilisation et les exigences qui leurs sont associées. Pour prendre en charge efficacement les cas d'utilisation et des applications ayant des exigences hétérogènes, les systèmes de communication 5G et suivants déploieront une architecture nouvelle et flexible dans laquelle l'infrastructure réseau est divisée de manière logique en différentes instances, c'est-à-dire, des tranches de réseau (network slice, en anglais), conçues, chacune, pour un service spécifique s'exécutant dans l'environnement en nuage (cloud en anglais). Une tranche de réseau est composée de fonctions de réseau physiques (PNF) et de fonctions de réseau virtuelles (VNF). Une VNF représente la mise en œuvre logicielle, c'est-à-dire fonctionnant dans un environnement cloud, des fonctions traditionnelles, telles que le routage ou la planification de paquets. Le concept de tranche de réseau est illustré schématiquement par la figure 2. Le principal organisme de normalisation en matière de découpage de réseau en tranches est le 3GPP (Third Generation Partnership Project). Ses spécifications détaillent les fonctionnalités du réseau et leur enchaînement afin de fournir ces découpages sur le réseau d'accès radio (RAN, Radio Access Network) et le réseau cœur CN (Core Network) (3GPPTS28.531).

Outre la conception des fonctions d'accès et de cœur, l'une des tâches les plus difficiles à accomplir est d'assurer la transition d'un système OSS (pour Operating Support System) et d'un système BSS (pour Business support system) à capacités fixes à une nouvelle hiérarchie d'éléments devant traiter un écosystème très complexe tant du point de vue des utilisateurs du réseaux, des tranches réseaux, que des services qui ont généralement des exigences de débits et de qualité de service différentes.

En plus de la gestion, les futurs réseaux 5G et suivants nécessiteront des capacités d'orchestration, qui sont divisées en deux catégories principales, l'orchestration des services et l'orchestration des ressources. Des tâches telles que le partage d'une VNF entre des tranches du réseau, leur emplacement dans une infrastructure cloud hautement hétérogène ou le nombre de processeurs cœurs alloués ne sont que quelques exemples des responsabilités de fonctions de gestion et d'orchestration (M&O, Management and orchestration).

Les fonctions liées à la gestion du cycle de vie des fonctions réseau virtuelles VNF et à l'orchestration de leurs ressources vont au-delà de la responsabilité du groupe 3GPP. L'organisme de normalisation chargé de définir ces fonctions est l'Institut européen des normes de télécommunication (ETSI), plus précisément le groupe de normalisation de la fonction de réseau (NFV) (ETSIGR).

La figure 3 montre la correspondance entre les tranches de réseau 3GPP et les concepts introduits par ETSI NFV. Une tranche de réseau est vue du point de vue de l'ETSI comme un service réseau. La figure 4 illustre la correspondance entre tranches réseau et fonctions réseau requises. Une fonction réseau peut être dédiée à une tranche spécifique ou partagée entre plusieurs tranches. La figure 5 illustre schématiquement des fonctions réseaux partagées et des fonctions réseau dédiées dans une tranche réseau.

Selon le groupe 3GPP, une tranche de réseau est un réseau logique qui s'étend sur le réseau d'accès Radio RAN et sur le réseau cœur CN. Pour gérer chaque domaine, le groupe 3GPP propose de décomposer une tranche en sous-réseaux RAN et CN et définit la fonction de gestion de tranche de réseau (NSMF, pour Network Slice Management Function) et la fonction de gestion de sous-réseau de tranche de réseau (NSSMF, pour Network Slice Subnet Management Function). Le NSMF étant l'entité responsable de la gestion d'une tranche sur plusieurs domaines et le NSSMF est l'entité chargée de la gestion des sous-réseaux de tranche dans un domaine spécifique (3GPPTS28.531). Un sous-réseau de tranches comprend des fonctionnalités radio et des fonctionnalités cœur du réseau configurées pour fournir un comportement particulier et répondre à des exigences spécifiques. Pour créer et gérer une tranche, le NSMF (et les NSSMF) utilisent un ensemble de descripteurs prédéfinis ou un modèle. Chaque descripteur, appelé modèle NST (Network Slice Template), fournit la description des fonctionnalités et leur configuration spécifique (par exemple, les bandes de fréquences de fonctionnement). Il décrit en particulier la liste des composants NFV devant être instanciés pour configurer une instance de tranche de réseau, ainsi que d'autres informations, telles que les configurations, les étapes du cycle de vie, les actions, la surveillance, les règles, les contrats de niveau de service, etc.

Cependant, ces cadres de normalisation ne définissent que des directives sur les aspects architecturaux (interfaces et exigences) et des principes de conception sans fournir de solutions spécifiques pour la configuration et la gestion de tranches de réseau, tel que l'allocation des ressources nécessaires par le VNF, la gestion des priorités ou de la qualité du service. Par conséquent, il est nécessaire de créer de nouveaux schémas et cadres capables de gérer les ressources réseau liées à la radio, au transport et aux domaines du cloud. De plus, il est nécessaire de prendre en compte le fait que différentes demandes de tranche peuvent avoir des priorités et des contraintes différentes et que, par conséquent, les ressources du réseau doivent être gérées pour assurer une orchestration et une gestion croisées des ressources.

Pour résoudre les problèmes susmentionnés un concept d'élasticité des ressources pour les réseaux de communication a été introduit. Ce concept définit la capacité du réseau à s'adapter à la charge et aux autres modifications du système de manière automatique, de sorte que les ressources disponibles répondent à la demande aussi étroitement et efficacement que possible. En outre, les fluctuations temporelles et spatiales du trafic dans les réseaux exigent une mise à l'échelle efficace des ressources du réseau : ce dernier doit adapter son fonctionnement en redistribuant éventuellement les ressources disponibles en fonction des besoins jusqu'à une réduction en douceur des performances du réseau pour faire face aux demandes de pointe excessives tout en évitant une dégradation brutale de la QoS.

Bien que l'élasticité des réseaux soit traditionnellement exploitée dans le contexte des ressources de communication (par exemple, lorsqu'une station de base du réseau rétrograde la QoS pour les utilisateurs si les ressources de communication telles que le spectre sont insuffisantes), les futurs réseaux 5G et suivants doivent intégrer les aspects informatiques de l'élasticité des ressources car la virtualisation et la cloudification des réseaux sont devenues un défi majeur. En effet, contrairement aux réseaux précédents 4G, le découpage en tranches réseau nécessite des réseaux 5G et suivants virtualisés pour pouvoir optimiser conjointement les ressources de communication et de cloud.

Dans ce contexte, des fonctions d'élasticité des ressources ont été proposées dans trois dimensions différentes, à savoir :

1) l'élasticité de calcul dans la conception et la mise à l'échelle des VNF (Virtual Network Functions),
2) l'élasticité dictée par l'orchestration obtenue par le placement flexible de VNF, et
3) l'élasticité prenant en compte le découpage du réseau en tranches via des mécanismes d'approvisionnement en ressources croisées.

Des expériences de recherche ont montré que les NF (Network Functions) les plus onéreuses en termes de demande informatique sont celles liées au codage. Par conséquent, il a été proposé un algorithme pour la planification MAC en liaison montante qui offre une dégradation progressive en cas de variation soudaine de la charge qui ne pourrait pas être desservie par les ressources de calcul disponibles. En termes d'élasticité dictée par l'orchestration, le déploiement dynamique de VNFs permet d'adapter leur placement sur l'infrastructure cloud en fonction des exigences de calcul et de latence des services 5G et suivants ainsi que des caractéristiques et des capacités des nœuds du cloud.

En outre, des travaux sur l'intelligence artificielle pour les réseaux mobiles ont mis en évidence l'importance d'introduire l'intelligence et l'automatisation dans la fonction de contrôle d'admission.

Cependant, ces solutions ne permettent pas de résoudre de façon coordonnée les problèmes d'admission et de contrôle de la congestion pour la gestion et l'orchestration des tranches dans un réseau de télécommunication virtualisé car ils ne prennent pas en compte les ressources de calcul et de stockage des nœuds du cloud nécessaires pour le déploiement des tranches réseau ni les différentes priorités qui caractérisent les services associés à ces tranches réseau.

CN 109 743 217 concerne un ajustement adaptatif de ressources réseau basé sur un algorithme SVRA pour une architecture SDN/NFV (mise en réseau définie par logiciel (SDN) / virtualisation des fonctions de réseau (NFV)).

US 2019/173803 concerne une hiérarchisation et une orchestration de fonctions de réseau virtualisées.

Le but de l'invention est de fournir une solution permettant de contrôler de façon coordonnée l'admission de nouvelles tranches réseau et la congestion des services déployés sur lesdites tranches afin d'optimiser l'utilisation des ressources du réseau par lesdits services.

**Présentation de l'invention**

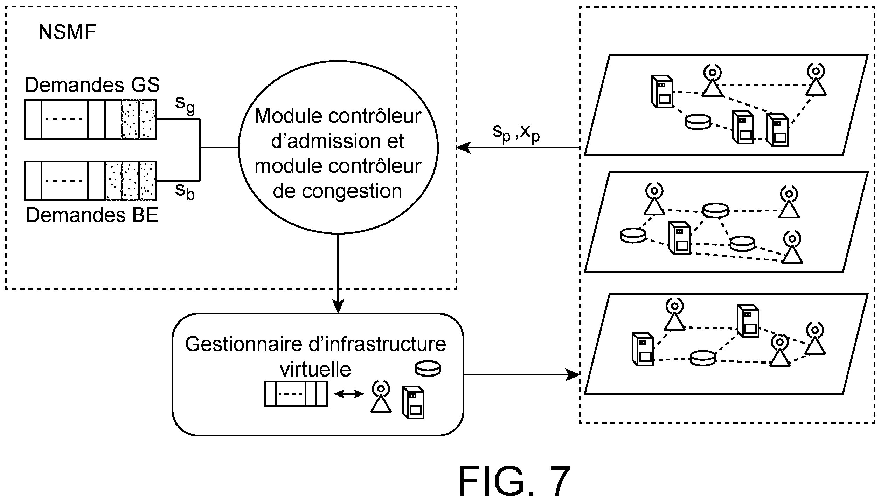

L'invention est mise en œuvre au moyen d'un système de gestion et d'orchestration de réseau cellulaire configuré pour recevoir des demandes de déploiement de service et pour décider du nombre et du type de tranches réseau qui peuvent être déployées/acceptées en fonction de priorités, de leurs besoins en ressources, de la présence d'autres demandes simultanées et des capacités réseau disponibles (qui dépendent des tranches réseau déjà déployées). Ce système est intégré dans le NSMF et, en particulier, fait partie des fonctions « Cross-slice M&O » qui permettent l'optimisation des ressources 5G entre tranches réseau avec de contraintes de QoS hétérogènes (voir Fig.7).

L'objectif de l'invention est donc d'accroître l'efficacité du réseau, c'est-à-dire d'augmenter l'efficacité du système 5G et en particulier les revenus du système à travers l'optimisation croisée du nombre et du type de tranches réseau qui peuvent être déployées.

Cet objectif est atteint au moyen d'un procédé de contrôle d'admission de tranches dans un réseau de télécommunication et de la congestion générée entre des services ayant des priorités différentes.

Le procédé selon l'invention comporte les étapes suivantes:

- définir une échelle de priorité à affecter aux tranches réseau,
- définir un seuil de priorité basse,
- déterminer la quantité ressources réseau disponibles $s_p(t)$ et utilisées et $x_p(t)$,
- déterminer la quantité de ressources allouées aux tranches ayant une priorité inférieure au seuil de priorité basse et susceptibles d'être affectées temporairement à de nouvelles tranches ayant une priorité supérieure audit seuil,
- déterminer les tranches susceptibles d'être acceptées dans le réseau en tenant compte des ressources disponibles, de la priorité des tranches et du résultat de l'étape précédente.

Selon l'invention, chaque tranche réseau logique comporte au moins deux ensembles de fonctions réseau, soit un ensemble de fonctions réseau $K^R$ qui correspondent au réseau d'accès radio RAN et un ensemble des fonctions réseau $K^C$ qui correspondent au réseau cœur.

Le procédé selon l'invention comporte en outre une étape pour contrôler une demande $S_g(t)$ d'admission d'au moins une tranche avec services garantis GS, Guaranteed Services) et une demande $S_b(t)$ admission d'au moins une tranche avec services à meilleur effort (BE, Best Effort), et une étape pour contrôler la congestion des services déployés sur lesdites tranches.

Le procédé selon l'invention comporte en plus une étape consistant à observer à chaque instant t au moyen d'un module contrôleur de congestion la file d'attente des demandes de tranches $s_g(t)$ et $s_b(t)$ ainsi que les ressources disponibles et utilisées $S_p(t)$ et $X_p(t)$, et à réduire la ressource allouée aux tranches BE ayant des priorités inférieures au seuil prédéfini de manière à accroître l'acceptation par un module contrôleur d'admission des tranches GS avec des priorités supérieures au seuil prédéfini.

La quantité de ressources réduite aux tranches BE est calculée de façon à maximiser la fonction suivante:

$$R_C(\boldsymbol{s}(t), \boldsymbol{a}(t)) = a_g(t)w_g - (K_r(t) + K_c(t) + K_m(t))l_c,$$

où $a_g(t)$ est la quantité de tranches GS acceptées par le contrôleur d'admission, $w_g$ est le ($K_r(t) + K_c(t) + K_m(t)$) revenu généré par une tranche GS acceptée, décrit la quantité totale de ressources de communication, de calcul et de stockage extraites des tranches BE déjà déployées pour déployer des tranches GS supplémentaires, et $l_c$ est le coût associé pour réduire les ressources nécessaires à le déploiement desdites tranches BE.

Le nombre de service accepté est calculé de façon à maximiser la fonction suivante:

$$R_A(\boldsymbol{s}(t), \boldsymbol{a}(t)) = a_g(t)w_g + a_b(t)w_b - n_d(t)l_d,$$

où $a_g(t)$ est la quantité de tranches GS acceptées par le contrôleur d'admission, $a_b(t)$ est la quantité de tranches BE acceptées par le contrôleur d'admission, $w_g$ et $w_b$ représentent les revenus pour chaque tranche GS et BE acceptée, respectivement, $l_d$ est le coût de suppression d'une demande de tranche GS et $n_d(t)$ est le nombre de tranches GS abandonnées instantanément.

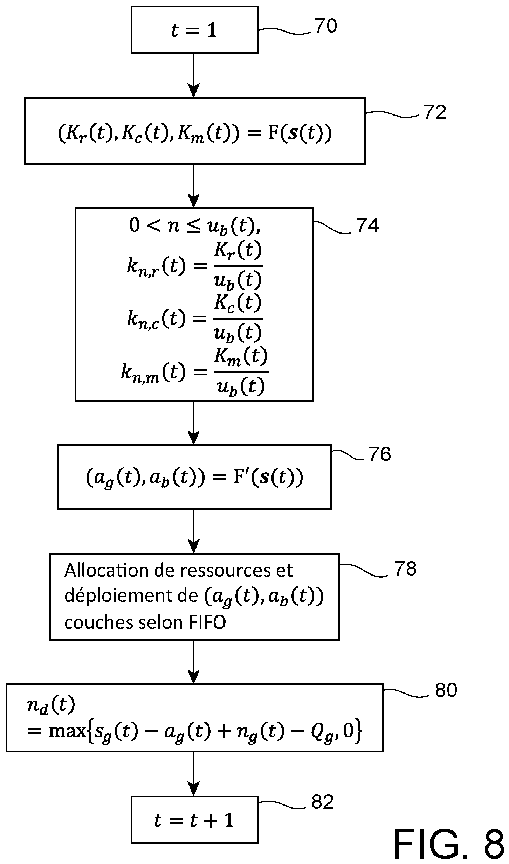

Dans une variante de réalisation du procédé selon l'invention, un seul module opère conjointement les fonctions d'admission de nouvelles tranches réseau et de congestion des services déployés sur le réseau (Figure 8-B) et dans lequel le nombre de service accepté est calculé de façon à maximiser la fonction suivante:

$$R_{AC}(\boldsymbol{s}(t), \boldsymbol{a}(t)) = a_g(t)w_g + a_b(t)w_b - n_d(t)l_d - \big(K_r(t) + K_c(t) + K_m(t)\big)l_c,$$

où $a_g(t)$ est la quantité de tranches GS acceptées par le contrôleur d'admission, $a_b(t)$ est la quantité de tranches BE acceptées par le contrôleur d'admission, $w_g$ et $w_b$ représentent les revenus pour chaque tranche GS et BE acceptée, respectivement, $l_d$ est le coût de suppression d'une demande de tranche GS, $n_d(t)$ est le nombre de tranches GS abandonnées instantanément, $(K_r(t) + K_c(t) + K_m(t))$ décrit la quantité totale de ressources de communication, de calcul et de stockage extraites des tranches BE déjà déployées pour déployer des tranches GS supplémentaires, et $l_c$ est le coût associé pour réduire les ressources nécessaires à le déploiement desdites tranches BE. En outre, l'acceptation de nouvelles tranches GS est limitée de manière à ne pas dégrader excessivement la qualité de service des tranches BE déjà déployées, et en ce qu'une quantité minimale de ressources est maintenue sur chaque tranche BE déployée de manière à limiter le montant global des ressources réduites des tranches BE. Préférentiellement, le contrôle d'admission et de congestion des services déployés se fait à travers un mécanisme d'apprentissage par renforcement qu'optimise une fonction à long terme ou moyenne du système qui tient en compte du nombre des services acceptés et du nombre de demandes supprimées des files d'attente.

## Brève description des figures

D'autres caractéristiques et avantages de l'invention ressortiront de la description qui va suivre, prise à titre d'exemple non limitatif, en référence aux figures annexées dans lesquelles :

[Fig. 1] illustre la correspondance entre de nouvelles applications et services et les exigences associées à ces nouvelles applications et services dans les systèmes de communication 5G,

[Fig. 2] illustre schématiquement le concept de tranche de réseau,

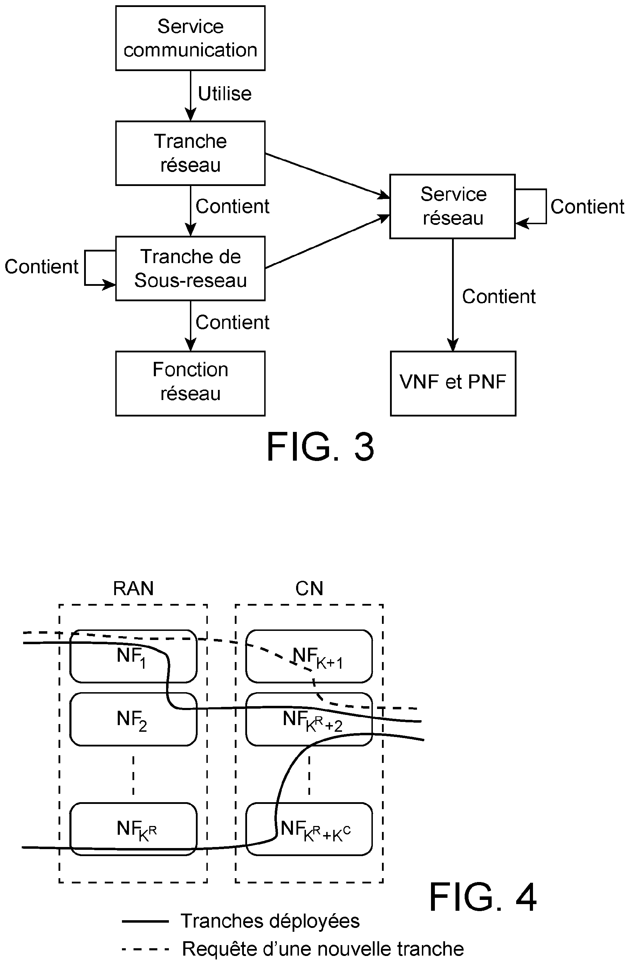

[Fig. 3] illustre la correspondance entre tranches de réseau 3GPP et les concepts ETSI NFV (European Telecommunication Standard Institute, Network Functions Virtualisation),

[Fig. 4] représente la correspondance des services aux fonctions réseau requises,

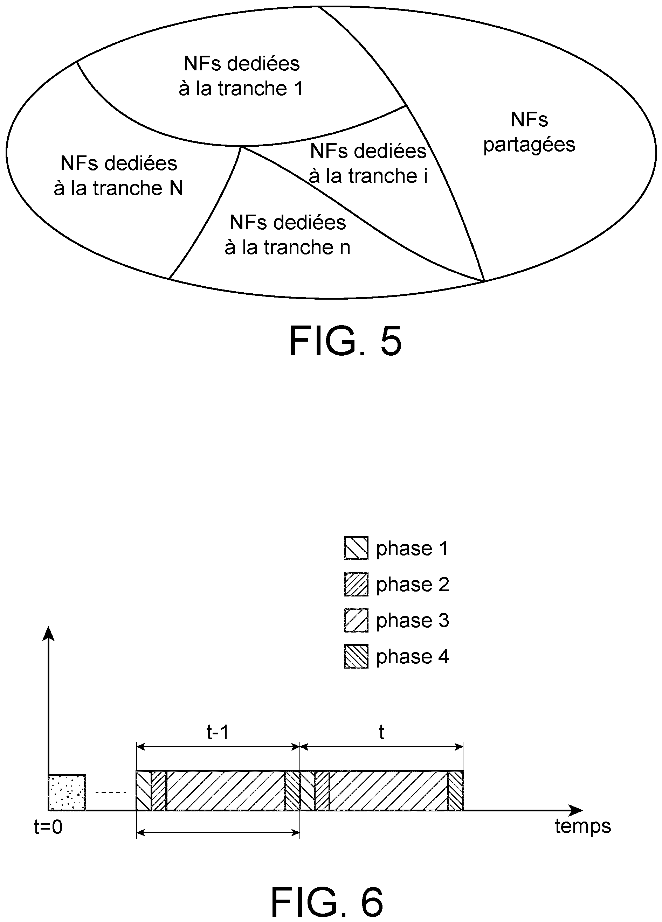

[Fig. 5] représente une illustration de fonctions réseau partagées et de fonctions réseau dédiées dans une tranche réseau déployée (network slice instance, NSI, en anglais) qui permet la mise en œuvre simultanée de plusieurs services,

[Fig. 6] représente un organigramme illustrant le cycle de prise de décision pour l'admission de tranche réseau et le contrôle de congestion selon l'invention,

[Fig. 7] illustre une possible implémentation fonctionnelle du mécanisme proposé comme fonction du NSMF,

[Fig. 8] représente un premier organigramme illustrant les étapes d'un premier procédé selon l'invention,

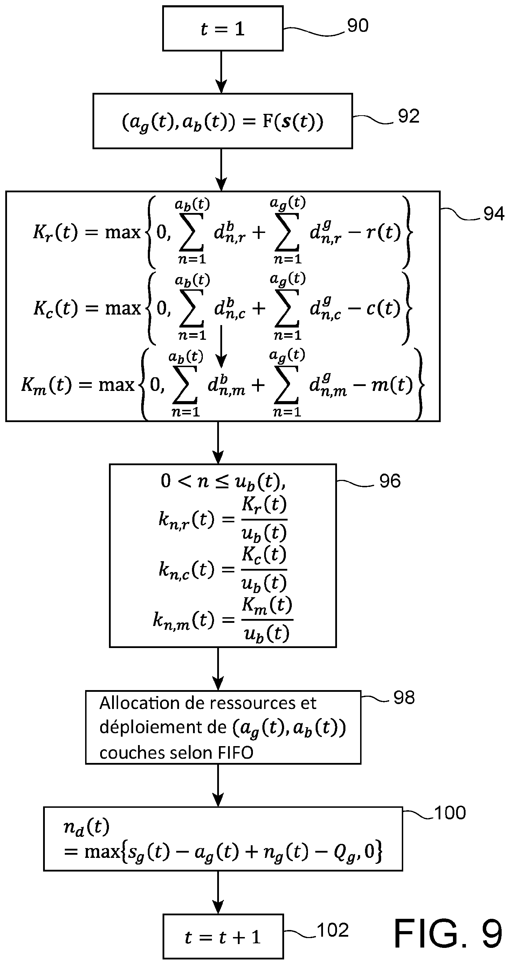

[Fig. 9] représente un deuxième organigramme illustrant les étapes d'un deuxième procédé selon l'invention.

## Description des modes de réalisation

Le procédé selon l'invention sera décrit dans le cadre d'un système de gestion et d'orchestration de réseau cellulaire configuré pour recevoir des demandes de déploiement de service et pour décider des tranches réseau dans lesquelles ces services pourront être déployés en fonction de leurs types/priorités, de leurs besoins en ressources, de la présence d'autres demandes simultanées et des capacités réseau disponibles qui dépendent des tranches réseau déjà déployées.

Dans la suite de cette description, le déploiement d'une tranche réseau signifiera le déploiement des applications et services susceptibles d'être fournis dans cette tranche. Chaque service est déployé dans une tranche réseau logique comportant au moins eux ensembles de fonctions réseau virtuelles VNFs, soit un ensemble de fonctions réseau $K^R$ correspondent au réseau d'accès radio RAN et un ensemble des fonctions réseau $K^C$ correspondent au réseau cœur.

Un objectif de l'invention est d'optimiser le contrôle d'admission de nouvelles tranches ayant une priorité hétérogène dans un réseau et le contrôle des éventuelles congestions générées par les services déployés sur ces tranches de manière à obtenir un compromis entre l'utilisation des ressources et la probabilité de refuser le déploiement de ces nouvelles tranches.

L'invention est mise en œuvre au moyen d'un système de gestion et d'orchestration de réseau cellulaire configuré pour recevoir des demandes de déploiement de service et pour décider des tranches réseau qui peuvent être déployées / acceptées en fonction de leurs types / priorités, de leurs besoins en ressources, de la présence d'autres demandes simultanées et des capacités réseau disponibles (qui dépendent des tranches réseau déjà déployées).

L'objectif de l'invention est donc d'accroître l'efficacité du réseau, c'est-à-dire d'augmenter le nombre de tranches réseau et donc de services déployés sur ces tranches en utilisant un ensemble donné de ressources réseau, afin d'augmenter les revenus du système.

La description qui suit, sera faite dans le cas de de demandes de déploiement de tranche sur lesquels seront déployés deux types de services, soit des services garantis (GS, Guaranteed Service) et des service avec le meilleur effort (BE, Best Effort). Chaque type de service est caractérisé par une file d'attente qui est utilisée lors du cycle de prise de décision pour l'admission de nouvelles tranches. Cependant, l'inventions s'applique également dans le cas de demandes concernant plusieurs types de services.

Dans le cas de l'application décrite, nous supposons que les tranches BE (Best Effort) permettent au système de réduire temporairement leurs ressources afin de gérer les tranches de qualité de service (GS) garanties, qui ont des priorités plus élevées et des exigences d'isolation strictes. L'acceptation de services qui ont des priorités plus élevés et des contraintes plus strictes typiquement amène des revenus plus élevé au système 5G. Rappelons qu'une tranche réseau est composée d'un ensemble de fonctions de réseau associées qui déterminent la quantité de ressources requise. Par exemple, les fonctions réseau typiques dans les ensembles RAN et CN sont les fonctions de tranche physique, de routage et de mise en cache. Trois types de ressources sont nécessaires pour déployer une tranche: communication (en termes de bande passante (MHz), calcul (en (GFLOPS / s)) et stockage en nuage (en (Go)).

La figure 6 illustre schématiquement les différentes phases, phase 1 à phase 4, du cycle de prise de décision pour l'admission de nouvelles tranches dans un réseau et pour le contrôle de la congestion susceptible d'affecter le trafic dans le réseau.

Au début de chaque intervalle de temps, en fonction des états actuels de ces files d'attente et des ressources réseau momentanées disponibles, au cours de la phase 1, on implémente d'abord le contrôle de congestion qui permet de réduire les ressources allouées à une tranche déployée, puis au cours de la phase 2, on sélectionne les demandes de tranche à admettre. Ensuite, au cours de la phase 3, c'est-à-dire la phase de déploiement des tranches, on alloue les ressources du réseau en fonction des décisions prises et les tranches acceptées sont instanciées. Enfin, au cours de la dernière phase 4, c'est-à-dire la phase de mise à jour des informations, de nouvelles demandes arrivent et les files d'attente des tranches de réseau sont mises à jour en conséquence. Cette approche permet de répartir de manière dynamique les ressources disponibles entre des demandes de tranche avec des priorités différentes.

A cet effet, et en référence à la figure 7, le module contrôleur d'admission et le module contrôleur de congestion opèrent de façon coordonnée pour contrôler une demande $s_g$ d'admission d'au moins une tranche avec services garantis (GS, Guaranteed Services) et une demande $s_b$ d'admission d'au moins une tranche avec services à meilleur effort (BE, Best Effort), et pour contrôler la congestion des services déployés sur lesdites tranches, le contrôleur de congestion observe la file d'attente des demandes de tranches $s_g$ et $s_b$ ainsi que les ressources disponibles et utilisées $s_p$ et $x_p$, et réduit, via un gestionnaire d'infrastructure virtuelle, la ressource allouée aux tranches BE ayant des priorités inférieures au seuil prédéfini de manière à accroître l'acceptation des tranches GS avec des priorités supérieures au seuil prédéfini.

Pour réaliser les opérations ci-dessus, on définit la demande totale en ressources de communication, de calcul et de stockage en nuage (cloud) de la nième demande de tranche comme suit:

$$T_n = \left( d_{n,r}, d_{n,c}, d_{n,m} \right)$$

L'espace d'états du contrôle d'admission et de congestion de tranche de réseau proposé, noté S, comprend les ensembles décrivant les états de la file d'attente GS, la file d'attente BE, les ressources réseau disponibles, le nombre de tranches GS déployées, le nombre de tranches BE déployées, et les ressources allouées aux tranches BE. En conséquence, S est défini comme suit:

$$S = S_g \times S_b \times S_p \times U_g \times U_b \times X_p$$

À chaque intervalle de temps du cycle proposé à la figure 4 pour le déploiement et l'orchestration de tranches, le nombre de demandes de tranches dans les files d'attente GS et BE est désigné respectivement par

$$s_g \in S_g = \left\{ 0, 1, \ldots, Q_g \right\}$$

et

$$s_b \in S_b = \left\{ 0, 1, \ldots, Q_b \right\},$$

où $Q_g$ et $Q_b$ sont respectivement la longueur maximale des files d'attente GS et BE. En ce qui concerne l'état des ressources du réseau, on désigne les ressources réseau disponibles pour la communication, le calcul et le stockage en nuage, respectivement par $s_p$ = (r, c, m) E $S_p$ où r E {0,1, ..., R} et c $\in$ {0,1, ..., C} et E {0,1, ..., M}

On indique également le nombre de tranches GS déployées, de tranches BE déployées et des ressources réseau associées aux tranches BE en cours d'exécution respectivement sous la forme :

$u_g \in u_g$ = {0,1, ..., $U_g$} et $u_b$ E $u_b$ = {0,1, ..., $U_b$} et $x_p$ = ($x_r$, $x_c$, $x_m$) $\in X_p \subseteq S_p$, $U_g$ et $U_b$ sont les nombres maximums de tranches GS et BE, pouvant être simultanément acceptés par le système.

Dans un exemple particulier de mise en œuvre de l'invention, afin d'augmenter le nombre de tranches GS acceptées, seules les ressources allouées aux tranches BE seront réduites. Dans ce cas, il n'est pas nécessaire de définir un ensemble lié aux ressources allouées aux tranches GS. Cependant, lorsqu'il existe plusieurs classes de demandes de tranche, pour chaque classe dont les ressources peuvent être réduites, on définira l'ensemble des ressources allouées.

Ensuite, les nombres de nouvelles demandes de tranches GS et BE reçues à chaque intervalle de temps seront désignés respectivement par $n_g \in N_g$ = {0,1, ..., $N_g$} et $n_b \in N_b$ = {0,1, ..., $N_b$}, où $N_g$ et $N_b$ sont les nombres maximaux de demandes en instance respectivement pour les services GS et BE.

En représentant les probabilités de recevoir des demandes de tranches GS et BE à un créneau donné respectivement par $p_n^g$ et $p_n^b$, nous avons:

$$\sum_{n=0}^{N_g} p_n^g = 1 \text{ and } \sum_{n=0}^{N_b} p_n^b = 1$$

Il est important de noter que la capacité des files d'attente est limitée afin d'éviter un délai trop long pour les demandes de déploiement dans les files d'attente. Ensuite, une demande de tranche est supprimée lorsqu'elle arrive dans une file d'attente saturée.

De plus, lorsqu'une couche donnée est supprimée du réseau, toutes les ressources qui lui sont allouées sont immédiatement libérées.

La figure 8 représente un premier mode de réalisation de l'invention, où les étapes du procédé selon l'invention sont mises en œuvre par un module contrôleur d'admission et un module contrôleur de congestion opérant de façon coordonnée pour contrôler l'admission de nouvelles tranches réseau et la congestion des services déployés sur le réseau.

Contrôle de congestion

À chaque intervalle de temps t (étape 70), le contrôleur de congestion observe la file d'attente des demandes de tranches $s_g(t)$ et $s_b(t)$ ainsi que les ressources disponibles et utilisées $s_p(t)$ et $x_p(t)$. En fonction des priorités entre les différentes demandes, le contrôleur de congestion décide (étape 72) de réduire la ressource allouée aux tranches ($u_b(t)$) en cours d'exécution ayant des priorités faibles (tranches BE), afin d'accroître l'acceptation des tranches avec des priorités plus élevées (tranches GS).

Pour cela, une façon de décider la quantité de ressources à réduire aux tranches en cours d'exécution ayant des priorités faibles est de maximiser la fonction suivante:

$$R_C(s(t), a(t)) = a_g(t)w_g - (K_r(t) + K_c(t) + K_m(t))l_c, \qquad (1)$$

où $a_g(t)$ est la quantité de tranches GS acceptées par le contrôleur d'admission, $w_g$ est le revenu généré par une tranche GS acceptée (notez que cela peut être généralisé au cas où chaque tranche GS a un $w_g$ distinct), ($K_r(t) + K_c(t) + K_m(t)$) décrit la quantité (totale) de ressources de communication, de calcul et de stockage sur le cloud extraites des tranches BE déjà déployées pour déployer des tranches GS supplémentaires, et $l_c$ est le coût associé à la réduction de ressources des tranches BE. Ce coût peut être lié à la performance réduite des tranches BE lorsqu'elles fonctionnent avec une quantité de ressources réduite.

Notons que l'acceptation de nouvelles tranches GS peut être limitée par la nécessité de ne pas dégrader de manière excessive la qualité de service des tranches BE en cours d'exécution. Ensuite, on peut considérer qu'une quantité minimale de ressources radio ($\delta_r$), de calcul ($\delta_c$) et de stockage ($\delta_m$) doit être maintenue sur chaque tranche BE déployée pour satisfaire leurs contraintes de QoS. En conséquence, le montant global des ressources réduites de tranches BE est limité comme suit:

$$\sum_{n=1}^{a_b(t)} d_{n,r}^b + \sum_{n=1}^{a_g(t)} d_{n,r}^g \le x_r(t) + r(t) - \delta_r u_b(t),$$

$$\sum_{n=1}^{a_b(t)} d_{n,c}^b + \sum_{n=1}^{a_g(t)} d_{n,c}^g \le x_c(t) + c(t) - \delta_c u_b(t), \quad (2)$$

$$\sum_{n=1}^{a_b(t)} d_{n,m}^b + \sum_{n=1}^{a_g(t)} d_{n,m}^g \le x_m(t) + m(t) - \delta_m u_b(t),$$

où $a_b(t)$ est la quantité de tranches BE acceptées par le contrôleur d'admission. L'équation (2) décrit le nombre maximal de tranches GS pouvant être déployées en récupérant une partie des ressources à partir des tranches BE en cours d'exécution. Cependant, ces contraintes ne garantissent pas qu'une quantité minimale de ressources radio ($\delta_r$), de calcul ($\delta_c$) et de stockage ($\delta_m$) soit maintenue sur chaque tranche BE déployée. Pour ce faire, il est important d'envisager une stratégie de planification récupérant les ressources sur les tranches déployées. Par exemple, lorsque le contrôle de congestion est actif, les ressources peuvent être prélevées de manière égale sur les tranches BE en cours d'exécution.

Dans ce cas, la quantité de ressources extraites d'une seule tranche $0 < n \le u_b(t)$ est calculée comme suit (étape 74) :

$$k_{n,r}(t) = \frac{K_r(t)}{u_b(t)}$$

$$k_{n,c}(t) = \frac{K_c(t)}{u_b(t)} \quad (3)$$

$$k_{n,m}(t) = \frac{K_m(t)}{u_b(t)}$$

où $k_{n,r}(t)$, $k_{n,c}(t)$ et $k_{n,m}(t)$ représentent respectivement la quantité de ressources de communication, de calcul et de stockage en nuage extraite de la nième tranche BE au créneau horaire t.

Contrôle d'admission de déploiement de nouvelles tranches

La figure 8 représente un organigramme illustrant les étapes de ce procédé selon l'invention dans lequel, en fonction des priorités entre les différentes demandes de déploiement de nouvelles tranches et des ressources disponibles, le contrôleur d'admission décide quelle et combien de tranches doivent être acceptée. En particulier, à chaque intervalle de temps t, le contrôleur d'admission sélectionne une action $a(t) = (a_g(t), a_b(t)) \in \mathcal{A}$ qui détermine le nombre de demandes $a_g(t)$ et $a_b(t)$ respectivement de tranche GS et BE acceptées (étape 76). Ensuite, étant donné que les demandes de tranche dans chaque file d'attente sont servies selon le mode première entrée, première sortie (FIFO), les premiers $(a_g(t), a_b(t))$ demandes sont déployées (étape 78 ). Par exemple, si $a_g(t) = 2$, les deux premières demandes de tranche de la file d'attente GS sont servies. Les actions choisies à chaque intervalle de temps doivent garantir que le nombre de demandes de tranche BE (respectivement GS) acceptées ne dépasse pas le nombre réel de demandes de tranche BE (respect GS) dans la file d'attente :

$$a_g(t) \le s_g(t) \text{ et } a_b(t) \le s_b(t).$$

De plus, comme décrit ci-dessous, les contraintes de l'équation (4) garantissent que, pour les tranches BE acceptées, la somme des ressources allouées pour chaque type de ressource est inférieure ou égale à la disponibilité actuelle des ressources.

$$\sum_{n=1}^{a_b(t)} d_{n,r}^b \le r(t),$$

$$\sum_{n=1}^{a_b(t)} d_{n,c}^b \le c(t), \qquad (4)$$

$$\sum_{n=1}^{a_b(t)} d_{n,m}^b \le m(t).$$

Notez que l'équation (4) suppose la présence du contrôleur de congestion présenté à l'étape 1. Lorsque ce contrôleur n'existe pas, l'équation (4) devient:

$$\sum_{n=1}^{a_b(t)} d_{n,r}^b + \sum_{n=1}^{a_g(t)} d_{n,r}^g \le r(t),$$

$$\sum_{n=1}^{a_b(t)} d_{n,c}^b + \sum_{n=1}^{a_g(t)} d_{n,c}^g \le c(t), \qquad (5)$$

$$\sum_{n=1}^{a_b(t)} d_{n,m}^b + \sum_{n=1}^{a_g(t)} d_{n,m}^g \le r(t).$$

Dans le cas général où plus de deux classes de tranches sont considérées, l'équation (4) inclura toutes les tranches pour lesquelles le contrôle de congestion n'est pas utilisé (les tranches dont la priorité est faible, par exemple).
L'objectif du contrôleur d'admission est d'augmenter les revenus de l'opérateur en maximisant le nombre de tranches acceptées, tout en limitant la probabilité qu'une demande de tranche entrante avec une priorité élevée (tranches GS) soit abandonnée car la file d'attente est saturée. En conséquence, une façon de prendre la décision instantanée ($a(t) = (a_g(t), a_b(t))$) associée à un état $s(t)$, est de maximiser une fonction qui prend en compte le nombre de tranches GS et BE acceptées, ainsi que le nombre de demandes GS abandonnées, définie comme suit:

$$R_A(s(t), a(t)) = a_g(t)w_g + a_b(t)w_b - n_d(t)l_d, \qquad (6)$$

où $w_g$ et $w_b$ représentes les revenus pour chaque tranche GS et BE acceptée, respectivement. En outre, $l_d$ est le coût de suppression d'une demande de tranche GS et $n_d$ (t) est le nombre de couches GS abandonnées instantanément, qui peuvent être calculées comme suit (étape 80) :

$$n_d(t) = \max\{s_g(t) - a_g(t) + n_g(t) - Q_g, 0\}.$$

Le temps est ensuite incrémenté à l'étape 82.

Le figure 9 représente un deuxième mode de réalisation de l'invention, où les étapes du procédé selon l'invention sont mises en œuvre par un seul module contrôleur opérant conjointement les fonctions d'admission de nouvelles couches réseau et de congestion des services déployés sur le réseau.

Contrôle conjoint d'admission et de congestion

Dans ce mode de réalisation, à chaque intervalle de temps t (étape 90), le contrôleur $s(t) = (s_g(t), s_b(t), s_p(t), u_g(t), u_b(t), x_p(t))$ observe l'état du système et décide quelle et combien de tranches doivent être acceptée (étape 92). L'objectif du contrôleur est d'augmenter les revenus de l'opérateur en maximisant le nombre de tranches acceptées, tout en limitant la probabilité qu'une demande de tranche entrante avec une priorité élevée (tranches GS) soit abandonnée car la file d'attente est saturée. De plus, ce contrôleur doit éviter de perte excessive de QoS dans les tranches déployées avec une priorité faible (tranches BS). Pour cela, on peut déterminer l'action $a(t) = (a_g(t), a_b(t)))$, à prendre lors de l'état $s(t)$, en maximisant la fonction objectif :

$$R_{AC}(s(t), a(t)) = a_g(t)w_g + a_b(t)w_b - n_d(t)l_d - (K_r(t) + K_c(t) + K_m(t))l_c.$$

La quantité totale de ressources extraites des tranches BE via le contrôleur de congestion peut être calculée en fonction de tranches acceptées et de ressources disponibles, comme suit (étape 94):

$$K_r(t) = \max\left\{0, \sum_{n=1}^{a_b(t)} d_{n,r}^b + \sum_{n=1}^{a_g(t)} d_{n,r}^g - r(t)\right\}$$

$$K_c(t) = \max\left\{0, \sum_{n=1}^{a_b(t)} d_{n,c}^b + \sum_{n=1}^{a_g(t)} d_{n,c}^g - c(t)\right\}$$

$$K_m(t) = \max\left\{0, \sum_{n=1}^{a_b(t)} d_{n,m}^b + \sum_{n=1}^{a_g(t)} d_{n,m}^g - m(t)\right\}.$$

Comme pour contrôleur de congestion simple, la quantité de ressources extraites d'une seule tranche $0 < n \leq u_b(t)$ est calculée comme suit (étape 96) :

$$k_{n,r}(t) = \frac{K_r(t)}{u_b(t)}$$

$$k_{n,c}(t) = \frac{K_c(t)}{u_b(t)}$$

$$k_{n,m}(t) = \frac{K_m(t)}{u_b(t)}.$$

Ensuite, étant donné que les demandes de tranche dans chaque file d'attente sont servies selon le mode première entrée, première sortie (FIFO), les premiers $(a_g(t), a_b(t))$ demandes sont déployées (étape 98).

Finalement, les nouvelles demandes de tranche arrivent dans le système est on peut déterminer le nombre de demandes GS abandonnées comme suit (étape 100) :

$$n_d(t) = \max\{s_g(t) - a_g(t) + n_g(t) - Q_g, 0\}.$$

Le temps est ensuite incrémenté à l'étape 102.

**Revendications**

1. Procédé de contrôle d'admission de tranches dans un réseau de télécommunication virtualisé ayant un réseau cœur et un réseau d'accès radio RAN et de la congestion générée par des services ayant des priorités différentes déployés sur lesdites tranches et susceptibles de partager une quantité de ressources donnée, comportant les étapes suivantes :

    - définir une échelle de priorité à affecter aux tranches,
    - déterminer la quantité de ressources réseau disponibles $s_p(t)$ et utilisées et $x_p(t)$, le procédé étant **caractérisé par** les étapes suivantes :

        - définir un seuil de priorité basse,
        - déterminer la quantité de ressources allouées aux tranches ayant une priorité inférieure au seuil de priorité basse et susceptibles d'être affectées temporairement à de nouvelles tranches ayant une priorité supérieure audit seuil, et
        - déterminer les tranches susceptibles d'être acceptées dans le réseau en tenant compte des ressources disponibles, de la priorité des tranches et du résultat de l'étape précédente.

2. Procédé selon la revendication 1 dans lequel chaque tranche comporte au moins deux ensembles de fonctions réseau, soit un ensemble de fonctions réseau K^R qui correspondent au réseau d'accès radio RAN et un ensemble des fonctions réseau K^C qui correspondent au réseau cœur.

3. Procédé selon la revendication 2 comportant en outre une étape pour contrôler une demande $s_g(t)$ d'admission d'au moins une tranche avec services garantis, GS, et une demande $s_b(t)$ d'admission d'au moins une tranche avec services à meilleur effort, BE,, et une étape pour contrôler la congestion des services déployés sur lesdites tranches.

4. Procédé selon la revendication 3 comportant en outre une étape consistant à observer à chaque instant t au moyen d'un module contrôleur de congestion la file d'attente des demandes de tranches $s_g(t)$ et $s_b(t)$ ainsi que les ressources disponibles et utilisées $s_p(t)$ et $x_p(t)$, et à réduire la ressource allouée aux tranches BE ayant des priorités inférieures au seuil prédéfini de manière à accroître l'acceptation par un module contrôleur d'admission des tranches GS avec des priorités supérieures au seuil prédéfini.

5. Procédé selon la revendication 4 dans lequel la quantité de ressources réduite aux tranches BE est calculée de façon à maximiser la fonction suivante:

$$R_C(\boldsymbol{s}(t), \boldsymbol{a}(t)) = a_g(t)w_g - (K_r(t) + K_c(t) + K_m(t))l_c,$$

où $a_g(t)$ est la quantité de tranches GS acceptées par le contrôleur d'admission, $w_g$ est le revenu généré par une tranche GS acceptée, $(K_r(t) + K_c(t) + K_m(t))$ décrit la quantité totale de ressources de communication, de calcul et de stockage extraites des tranches BE déjà déployées pour déployer des tranches GS supplémentaires, et $l_c$ est le coût associé pour réduire les ressources nécessaires à le déploiement desdites tranches BE.

6. Procédé selon la revendication 4 dans lequel le nombre de service accepté est calculé de façon à maximiser la fonction suivante:

$$R_A(\boldsymbol{s}(t), \boldsymbol{a}(t)) = a_g(t)w_g + a_b(t)w_b - n_d(t)l_d,$$

où $a_g(t)$ est la quantité de tranches GS acceptées par le contrôleur d'admission, $a_b(t)$ est la quantité de tranches BE acceptées par le contrôleur d'admission, $w_g$ et $w_b$ représentent les revenus pour chaque tranche GS et BE acceptée, respectivement, $l_d$ est le coût de suppression d'une demande de tranche GS et $n_d(t)$ est le nombre de tranches GS abandonnées instantanément.

7. Procédé selon la revendication 3 dans lequel un seul module opère conjointement les fonctions d'admission de nouvelles tranches réseau et de congestion des services déployés sur le réseau et dans lequel le nombre de service accepté est calculé de façon à maximiser la fonction suivante:

$$R_{AC}(\boldsymbol{s}(t), \boldsymbol{a}(t)) = a_g(t)w_g + a_b(t)w_b - n_d(t)l_d - \big(K_r(t) + K_c(t) + K_m(t)\big)l_c,$$

où $a_g(t)$ est la quantité de tranches GS acceptées par le contrôleur d'admission, $a_b(t)$ est la quantité de tranches BE acceptées par le contrôleur d'admission, $w_g$ et $w_b$ représentent les revenus pour chaque tranche GS et BE acceptée, respectivement, $l_d$ est le coût de suppression d'une demande de tranche GS, $n_d(t)$ est le nombre de tranches GS abandonnées instantanément, $(K_r(t) + K_c(t) + K_m(t))$ décrit la quantité totale de ressources de communication, de calcul et de stockage extraites des tranches BE déjà déployées pour déployer des tranches GS supplémentaires, et $l_c$ est le coût associé pour réduire les ressources nécessaires à le déploiement desdites tranches BE.

8. Procédé selon la revendication 2 dans lequel l'acceptation de nouvelles tranches GS est limitée de manière à ne pas dégrader excessivement la qualité de service des tranches BE déjà déployées, et en ce qu'une quantité minimale de ressources est maintenue sur chaque tranche BE déployée de manière à limiter le montant global des ressources réduites des tranches BE.

9. Procédé selon la revendication 2 dans lequel le contrôle d'admission et de congestion des services déployés se fait à travers un mécanisme d'apprentissage par renforcement.

10. Programme d'ordinateur mémorisé sur un support d'enregistrement et comportant des instructions pour mettre en œuvre le procédé selon l'une des revendications 1 à 9 lorsqu'il est exécuté sur un ordinateur.

**Patentansprüche**

1. Verfahren zur Steuerung der Zulassung von Slices in einem virtualisierten Telekommunikationsnetz, das ein Kernnetz und ein Funkzugangsnetz RAN aufweist, und der Überlastung, die durch Dienste generiert wird, die unterschiedliche Prioritäten aufweisen, die in den Slices eingerichtet sind, und eine gegebene Menge an Ressourcen teilen können, die folgenden Schritte beinhaltend:

- Definieren einer Prioritätenskala, die den Slices zuzuweisen ist,
- Bestimmen der Menge an verfügbaren $s_p(t)$ und verwendeten und $x_p(t)$ Netzressourcen,

wobei das Verfahren durch die folgenden Schritte gekennzeichnet ist:

- Definieren einer Schwelle mit niedriger Priorität,

- Bestimmen der Menge an den Slices zugeteilten Ressourcen, die eine geringere Priorität als die Schwelle mit niedriger Priorität aufweisen, und vorübergehend neuen Slices zugewiesen werden können, die eine höhere Priorität als die Schwelle aufweisen, und

- Bestimmen der Slices, die in dem Netz unter Berücksichtigung der verfügbaren Ressourcen, der Priorität der Slices und des Ergebnisses des vorstehenden Schrittes akzeptiert werden können.

2. Verfahren nach Anspruch 1, wobei jedes Slice mindestens zwei Netzfunktionseinheiten, entweder eine Netzfunktionseinheit $K^R$, die dem Funkzugangsnetz RAN entsprechen, und eine Netzfunktionseinheit $K^C$, die dem Kernnetz entsprechen, beinhaltet.

3. Verfahren nach Anspruch 2, das weiter einen Schritt zum Steuern einer Anfrage $s_g(t)$ zur Zulassung von mindestens einem Slice mit garantierten Diensten, GS, und eine Anfrage $s_b(t)$ zur Zulassung von mindestens einem Slice mit Diensten mit besserer Wirkung, BE, und einen Schritt zum Steuern der Überlastung der in den Slices eingerichteten Dienste beinhaltet.

4. Verfahren nach Anspruch 3, das weiter einen Schritt beinhaltet, der darin besteht, zu jedem Zeitpunkt t anhand eines Überlastungssteuerungsmoduls die Warteschlange der Slice-Anfragen $s_g(t)$ und $s_b(t)$ sowie der verfügbaren und verwendeten Ressourcen $s_p(t)$ und $x_p(t)$ zu beobachten, und die den Slices BE, die geringere Prioritäten als die vordefinierte Schwelle aufweisen, zugeteilte Ressource zu verringern, um die Akzeptanz durch ein Zulassungssteuerungsmodul der Slices GS mit höheren Prioritäten als der vordefinierten Schwelle zu erhöhen.

5. Verfahren nach Anspruch 4, wobei die verringerte Menge an Ressourcen für die Slices BE derart berechnet ist, um die folgende Funktion zu maximieren:

$$R_c(s(t), a(t)) = a_g(t)w_g - (K_r(t) + K_c(t) + K_m(t))l_c,$$

wobei $a_g(t)$ die Menge an Slices GS ist, die von der Zulassungssteuerung akzeptiert werden, $w_g$ der Ertrag ist, der durch ein akzeptiertes Slice GS generiert wird, $(K_r(t) + K_c(t) + K_m(t))$ die Gesamtmenge an Kommunikations-, Berechnungs- und Ablageressourcen beschreibt, die aus den bereits eingerichteten Slices BE extrahiert werden, um zusätzliche Slices GS einzurichten, und $l_c$ die zugewiesenen Kosten sind, um die nötigen Ressourcen zum Einrichten der Slices BE zu verringern.

6. Verfahren nach Anspruch 4, wobei die akzeptierte Dienstanzahl derart berechnet wird, um die folgende Funktion zu maximieren:

$$R_A(s(t), a(t)) = a_g(t)w_g + a_b(t)w_b - n_d(t))l_d,$$

wobei $a_g(t)$ die Menge an von der Zugangssteuerung akzeptierten Slices GS ist, $a_b(t)$ die Menge an von der Zugangssteuerung akzeptierten Slices BE ist, $w_g$ und $w_b$ jeweils die Erträge für jedes akzeptierte Slice GS und BE repräsentieren, $l_d$ die Beseitigungskosten für eine Slicet-Anfrage GS sind, und $n_d(t)$ die Anzahl an umgehend aufgegebenen Slices GS ist.

7. Verfahren nach Anspruch 3, wobei ein einziges Modul gleichzeitig die Funktionen der Zulassung neuer Netz-Slices und der Überlastung der in dem Netz eingerichteten Dienste bearbeitet, und wobei die akzeptierte Dienstanzahl derart berechnet wird, um die folgende Funktion zu maximieren:

$$R_{AC}(s(t), a(t)) = a_g(t)w_g + a_b(t)w_b - n_d(t))l_d - (K_r(t)$$
$$+ K_c(t) + K_m(t))l_c,$$

wobei $a_g(t)$ die Menge an von der Zugangssteuerung akzeptierten Slices GS ist, $a_b(t)$ die Menge an von der Zugangssteuerung akzeptierten Slices BE ist, $w_g$ und $w_b$ jeweils die Erträge für jedes akzeptierte Slice GS und BE repräsentieren, $l_d$ die Beseitigungskosten für eine Slice-Anfrage GS sind, $n_d(t)$ die Anzahl an umgehend aufgegebenen Slices GS ist, $(K_r(t) + K_c(t) + K_m(t))$ die Gesamtmenge an Kommunikations-, Berechnungs- und Ablageressourcen beschreibt, die aus den bereits eingerichteten Slices BE extrahiert werden, um zusätzliche Slices GS einzurichten, und $l_c$ die zugewiesenen Kosten sind, um die nötigen Ressourcen zum Einrichten der Slices BE zu verringern.

**8.** Verfahren nach Anspruch 2, wobei die Akzeptanz neuer Slices GS derart begrenzt ist, um die Dienstqualität der bereits eingerichteten Slices BE nicht übertrieben zu verschlechtern, und dadurch, dass eine Mindestmenge an Ressourcen in jedem Slice BE beibehalten wird, der derart eingerichtet ist, um den Gesamtbetrag der verringerten Ressourcen der Slices BE zu begrenzen.

**9.** Verfahren nach Anspruch 2, wobei die Steuerung der Zulassung und Überlastung der eingerichteten Dienste anhand eines bestärkenden Lernmechanismus erfolgt.

**10.** Computerprogramm, das in einem Speichermedium abgelegt ist, und Anweisungen beinhaltet, um das Verfahren nach einem der Ansprüche 1 bis 9 umzusetzen, wenn es auf einem Computer ausgeführt wird.

**Claims**

**1.** A method for controlling the admission of slices in a virtualized telecommunications network having a core network and a radio access network RAN and the congestion generated by services having different priorities instantiated on said slices and likely to share a given quantity of resources, comprising the following steps of:

- defining a priority scale to be assigned to the slices,
- determining the quantity of available $s_p(t)$ and used $x_p(t)$ network resources ,

the method being **characterized by** the following steps of:

- defining a low priority threshold,
- determining the quantity of resources allocated to slices with a priority lower than the low priority threshold and which may be temporarily assigned to new slices with a priority higher than said threshold, and
- determining the slices likely to be accepted into the network, taking into account the available resources, the priority of the slices and the result of the preceding step.

**2.** The method according to claim 1 wherein each slice comprises at least two sets of network functions, the two sets comprising a set of network functions $K^R$ which correspond to the radio access network RAN and a set of network functions $K^C$ which correspond to the core network.

**3.** The method according to claim 2 further comprising a step for controlling a request $s_g(t)$ for admission of at least one slice with guaranteed services, GS, and a request $s_b(t)$ for admission of at least one slice with best effort, BE, services, and a step for controlling congestion of the services instantiated on said slices.

**4.** The method according to claim 3 further comprising a step consisting in observing at each instant t by means of a congestion controller module, the queue of slice requests $s_g(t)$ and $s_b(t)$ as well as the available and used resources $s_p(t)$ and $x_p(t)$ and reducing the resource allocated to BE slices with priorities below the predefined threshold so as to increase the acceptance by an admission controller module of GS slices with priorities above the predefined threshold.

**5.** The method according to claim 4 in which the quantity of resources reduced to BE slices is computed so as to maximize the following function:

$$R_C(\boldsymbol{s}(t), \boldsymbol{a}(t)) = a_g(t)w_g - (K_r(t) + K_c(t) + K_m(t))l_c,$$

where $a_g(t)$ is the quantity of GS slices accepted by the admission controller, $w_g$ is the income generated by an accepted GS slice, $(K_r(t) + K_c(t) + K_m(t))$ describes the total quantity of communication, computational and storage resources extracted from the BE slices already instantiated to instantiate additional GS slices, and $l_c$ is the associated cost to reduce the resources needed to instantiate said BE slices.

**6.** The method according to claim 4 in which the number of accepted services is computed so as to maximize the following function:

$$R_A(\boldsymbol{s}(t), \boldsymbol{a}(t)) = a_g(t)w_g + a_b(t)w_b - n_d(t)l_d,$$

where $a_g(t)$ is the quantity of GS slices accepted by the admission controller, $a_b(t)$ is the quantity of BE slices accepted by the admission controller, $w_g$ and $w_b$ represent the income for each accepted GS and BE slice, respectively, $l_d$ is the cost of deleting a GS slice request, and $n_d(t)$ is the number of GS slices abandoned instantaneously.

7. The method according to claim 3 in which a single module jointly operates the functions of admitting new network slices and controlling the congestion of services instantiated on the network and in which the number of accepted services is computed so as to maximize the following function:

$$R_{AC}(\boldsymbol{s}(t), \boldsymbol{a}(t)) = a_g(t)w_g + a_b(t)w_b - n_d(t)l_d - \big(K_r(t) + K_c(t) + K_m(t)\big)l_c,$$

where $a_g(t)$ is the quantity of GS slices accepted by the admission controller, $a_b(t)$ is the quantity of BE slices accepted by the admission controller, $w_g$ and $w_b$ represent the income for each accepted GS and BE slice, respectively, $l_d$ is the cost of deleting a GS slice request, $n_d(t)$ is the number of GS slices abandoned instantaneously, $(K_r(t) + K_c(t) + K_m(t))$ describes the total quantity of communication, computational and storage resources extracted from the BE slices already instantiated to instantiate additional GS slices, and $l_c$ is the associated cost to reduce the resources needed to instantiate said BE slices.

8. The method according to claim 2 in which the acceptance of new GS slices is limited so as not to excessively degrade the quality of service of the BE slices already instantiated, and in that a minimum quantity of resources is kept on each instantiated BE slice so as to limit the overall amount of reduced resources of the BE slices.

9. The method according to claim 2 in which the admission and congestion control of the instantiated services is made through a reinforcement learning mechanism.

10. A computer program stored on a recording medium and including instructions for carrying out the method according to any of claims 1 to 9 when run on a computer.

Haute importance

Débit de données
de pointe

Débit de donné

Bande à débit
amélioré

moyen

Capacité de
trafic local

bas

Efficacité
spectrale

Efficacité énergétique
du réseau

Mobilité

Communication
du type
machine massive

Densité de
connexions

Latence

Communications
ultra fiable
à faible temps
latence

# FIG. 1

# FIG. 2

FIG. 3

FIG. 4

——— Tranches déployées

- - - - Requête d'une nouvelle tranche

FIG. 5

FIG. 6

FIG. 7

$$t = 1$$ — 70

$$(K_r(t), K_c(t), K_m(t)) = \mathrm{F}(s(t))$$ — 72

$$0 < n \leq u_b(t),$$
$$k_{n,r}(t) = \frac{K_r(t)}{u_b(t)}$$
$$k_{n,c}(t) = \frac{K_c(t)}{u_b(t)}$$
$$k_{n,m}(t) = \frac{K_m(t)}{u_b(t)}$$
— 74

$$(a_g(t), a_b(t)) = \mathrm{F}'(s(t))$$ — 76

Allocation de ressources et déploiement de $(a_g(t), a_b(t))$ couches selon FIFO — 78

$$n_d(t) = \max\{s_g(t) - a_g(t) + n_g(t) - Q_g, 0\}$$ — 80

$$t = t + 1$$ — 82

FIG. 8

$$t = 1 \quad \sim 90$$

$$(a_g(t), a_b(t)) = \mathrm{F}(s(t)) \quad \sim 92$$

$$K_r(t) = \max\left\{0, \sum_{n=1}^{a_b(t)} d_{n,r}^b + \sum_{n=1}^{a_g(t)} d_{n,r}^g - r(t)\right\}$$

$$K_c(t) = \max\left\{0, \sum_{n=1}^{a_b(t)} d_{n,c}^b + \sum_{n=1}^{a_g(t)} d_{n,c}^g - c(t)\right\}$$

$$K_m(t) = \max\left\{0, \sum_{n=1}^{a_b(t)} d_{n,m}^b + \sum_{n=1}^{a_g(t)} d_{n,m}^g - m(t)\right\}$$

$\sim 94$

$$0 < n \le u_b(t),$$
$$k_{n,r}(t) = \frac{K_r(t)}{u_b(t)}$$
$$k_{n,c}(t) = \frac{K_c(t)}{u_b(t)}$$
$$k_{n,m}(t) = \frac{K_m(t)}{u_b(t)}$$

$\sim 96$

Allocation de ressources et déploiement de $(a_g(t), a_b(t))$ couches selon FIFO

$\sim 98$

$$n_d(t) = \max\{s_g(t) - a_g(t) + n_g(t) - Q_g, 0\}$$

$\sim 100$

$$t = t + 1 \quad \sim 102$$

# FIG. 9

**EP 3 806 402 B1**

## RÉFÉRENCES CITÉES DANS LA DESCRIPTION

**Documents brevets cités dans la description**

- CN 109743217

- US 2019173803 A